(19) Europäisches Patentamt
European Patent Office
Office européen des brevets

(11) **EP 3 488 213 B1**

(12) **EUROPEAN PATENT SPECIFICATION**

(45) Date of publication and mention
of the grant of the patent:
**30.06.2021 Bulletin 2021/26**

(51) Int Cl.:
***G01M 17/02*** *(2006.01)*

(21) Application number: **17768859.5**

(86) International application number:
**PCT/IB2017/054377**

(22) Date of filing: **19.07.2017**

(87) International publication number:
**WO 2018/015909 (25.01.2018 Gazette 2018/04)**

(54) **METHOD AND APPARATUS FOR CHECKING TYRES**

VERFAHREN UND VORRICHTUNG ZUR ÜBERPRÜFUNG VON REIFEN

PROCÉDÉ ET APPAREIL DE VÉRIFICATION DE PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2016 IT 201600076855**

(43) Date of publication of application:
**29.05.2019 Bulletin 2019/22**

(73) Proprietor: **Pirelli Tyre S.p.A.**
**20126 Milano (IT)**

(72) Inventors:
• **BOFFA, Vincenzo**
**20126 Milano (IT)**
• **HELD, Alessandro**
**20126 Milano (IT)**

• **ANTOJ, Riccardo**
**20126 Milano (IT)**
• **MARCHINI, Maurizio**
**20038 Seregno (MB) (IT)**
• **CASADIO TOZZI, Giuseppe**
**40026 Imola (BO) (IT)**
• **BALLARDINI, Valeriano**
**40026 Imola (BO) (IT)**

(74) Representative: **Porta & Consulenti Associati
S.p.A.
Via Vittoria Colonna, 4
20149 Milano (IT)**

(56) References cited:
**WO-A2-2008/138937     US-A- 4 223 386**

**Description**

The present invention relates to a method and an apparatus for checking tyres, for example in a tyre production line, in particular an apparatus for checking for the possible presence of defects close to the walls of a tyre.

The production cycles of a tyre provide for making and/or assembling the various components of a tyre being processed in one or more building lines and subsequently subjecting the green tyre to a moulding and vulcanization process adapted for defining the structure of the tyre according to a desired geometry and tread pattern.

The tyre, when moulded and vulcanized, is defined by a toroidal structure wound around a rotation axis and substantially symmetrical with respect to an axial mid-plane perpendicular to said rotation axis. In particular, the toroidal structure comprises a crown portion arranged substantially perpendicular to the axial mid-plane in a radially outer area of the tyre, two anchoring portions arranged in radially inner areas of the tyre respectively on opposite sides of the axial mid-plane and two lateral portions that respectively extend from opposite sides of the axial mid-plane between one of the anchoring portions and the crown portion.

The term "axial mid-plane" is meant to indicate a plane perpendicular to the rotation axis equidistant from the axially outer portions of the tyre itself.

The term "crown portion" of the tyre is meant to indicate a portion of the tyre arranged substantially perpendicular to the axial mid-plane, in a radially outer area of the tyre, and corresponding to the tread band and to portions of the belt structure and of the carcass structure arranged radially inner with respect to the tread band.

The term "anchoring portions" of the tyre, commonly also defined as "beads", is meant to indicate the radially inner areas of the tyre, respectively arranged on opposite sides of the axial mid-plane, configured so as to engage with the rim of a wheel.

The term "lateral portions" of the tyre is meant to indicate portions of the tyre that respectively extend from axially opposite sides of the axial mid-plane between each of the anchoring portions and the crown portion, corresponding to the actual sidewalls and to portions of the carcass structure arranged in axially inner position with respect to the aforementioned sidewalls.

The terms "rested lateral portion" and "free lateral portion" of the tyre are respectively meant to indicate a lateral portion rested on a support plane and the opposite lateral portion arranged a certain height from the support plane.

The terms "outer surface" or "inner surface" of the tyre are meant to respectively indicate the surface that remains visible after the coupling of the tyre with its own mounting rim and that which is no longer visible after said coupling. The inner and outer surfaces delimit the tyre.

The term "measurement surface" is meant to indicate a surface subjected promptly to checking having low dimensions with respect to the overall surface of said lateral portions.

The term "tyre profile" is meant to indicate the perimeter of at least part of the surface of the tyre, preferably of at least one from the outer surface and the inner surface of the tyre. Preferably, it means the perimeter taken on a radial section plane that contains the rotation axis of the tyre. More specifically, the term "profile" is meant to indicate the perimeter of a three-dimensional object, the shape, traced on a plane of projection from the lines passing through the centre of view and tangent to the surface of the object. The profile of the tyre therefore includes a set of points in a system of coordinated axes indicating the position in space of the tyre itself, the envelope of all the points defining the inner and outer surface of the tyre. Portions of the profile include portions of the inner and/or outer surface of the tyre.

US2006/0272408 describes a method and an apparatus for measuring the uniformity of the tyre. The method comprises the steps of mounting the tyre on a spindle, pressing a circumferential surface of a rotating drum against the tread surface of the tyre with a first pressing force, rotating the tyre around its axis, and calculating the forces on a first and a second plane of the tyre through calculation means while the tyre is rotating.

WO 2015/079370 describes an apparatus for checking tyres comprising a support plane configured to receive a tyre with axial mid-plane parallel to the support plane, defining a rested lateral portion and a free lateral portion arranged at a certain height with respect to the support plane. A pushing element is configured to apply a force oriented towards the support plane to a measurement surface of the free lateral portion. A positioning actuator is operatively associated with the pushing element and configured to move the pushing element with at least one motion component perpendicular to a rotation axis of the tyre. The apparatus also comprises devices for modifying the angular position of the measurement surface. A control unit is programmed to detect a first value of output data at each position of the measurement surface as a function of a first value of input data kept substantially constant along at least one complete rotation of the measurement surface around the rotation axis and to detect a second value of the output data at each position of the measurement surface. The second value of the output data corresponds to a second value of the input data kept substantially constant along at least one complete rotation of the measurement surface. The control unit comprises a module programmed to calculate, at each position of the measurement surface, a difference between the second value of the output data and the first value of the output data.

In known production cycles, to identify defects, the moulded and vulcanized tyre is subjected to a manual visual check or it can be subjected to an automatic check as described, for example, in the aforementioned document.

One of such manual visual checks is aimed at discarding tyres in which the lateral portion has little rigidity, i.e. at identifying the so-called "weak sidewall" defect, by sidewall meaning a lateral portion of the finished tyre.

The Applicant has observed that the accuracy of the manual checks carried out up to now depends greatly on the experience of the worker in charge of checking and has a high component of subjectivity.

The Applicant has noted that the insertion of a more accurate manual check to improve the quality of the finished product would risk to excessively increase the production times of a tyre.

The Applicant has observed that the use of automatic checks on the tyre of the type of those illustrated in US2006/272408 can improve the objectivity of the checking itself but due to the high number of factors in play, precision in the measurement and repeatability of the checking process may not be guaranteed.

As described in WO 2015/079370, to the same Applicant, an apparatus and a method for detecting the "weak sidewall" defect has been developed which provides for arranging the tyre to be checked on a support plane according to non-varying ways relative to the check to be carried out, and acting on the free lateral portion for equal or different time periods with forces of different magnitude. In this way, some factors that led to uncertain repeatability of the checks and to a good outcome thereof could be reduced.

However, the Applicant has noted that the check described in WO 2015/079370, although it solves some of the problems outlined above, requires a relatively long execution time, since in order for it to be carried out it is necessary to have an action on the free lateral portion of the tyre through at least two forces or at least two movements, thus implying a repetition of the check at least twice in all of its steps, lengthening the overall times thereof.

Furthermore, as reference system for the application of the compression on the free lateral portion of the tyre, WO 2015/079370 uses the support plane from which it is necessary to determine the position of the free lateral portion, i.e. to determine where to apply the compression it is necessary to establish at what height the surface to be checked of the tyre is located with respect to the support plane. However, the "support plane" reference system is not a precise reference system: in order to apply a correct compression, it is preferable to know the exact position of the free lateral portion in space, from which to establish to what height to bring the portion itself.

Moreover, in an apparatus of the type described in WO 2015/079370 it is necessary to establish where the free sidewall of the tyre is located in space and from that position to exert a deformation on it. Establishing the position of the free sidewall of the tyre where to apply the deformation requires, for every tyre, a contact step through a suitable "feeler pin" with the surface of the tyre itself for a complete rotation of the tyre and this results in an increase in the cycle time for every tyre to be analysed.

The Applicant has therefore perceived that by arranging the tyre to be checked on a support plane and determining the position of the free lateral portion on which to carry out the checking in an absolute manner and not relative to other elements of the checking apparatus such as the support plane, and by acting on such a portion with a deformation at a substantially constant displacement in a relative rotation of the tyre by 360°, all of the factors that led to an uncertain repeatability of the checks and to a good outcome thereof, as well as the duration of the overall cycle time, could be reduced.

The Applicant has finally found that the arrangement of the tyre on a support plane, the determining of a three-dimensional profile of the surface on which a tool is positioned to carry out a deformation of the surface itself, and the subsequent application of a displacement of substantially constant magnitude to the surface under examination, solve the problems outlined above, making it possible to limit the factors that influence the outcomes of the check, making it reliable and repeatable.

US 4223386 discloses a method and apparatus for assembling a tyre with disc wheel.

More precisely, in accordance with a first aspect, the invention concerns a method for checking tyres in accordance with claim 1.

The Applicant considers that the method according to the invention solves the problems outlined thanks to different factors. In fact, according to the invention, a three-dimensional profile of the tyre, in particular of at least one ring-shaped portion thereof, is detected. The ring-shaped portion is preferably a portion of the outer surface of the free tyre portion. This detection of the three-dimensional profile makes it possible to select an "absolute" coordinates system, i.e. it is possible to establish at what point the surface of the tyre that is compressed and deformed through a tool in the subsequent step of the method is located without reference relative to elements of the checking apparatus. The three-dimensional profile makes it possible to know the spatial position of the tyre independently from external elements. Therefore, the reference for the tool that must press the tyre is always given with respect to the profile of the tyre that represents the reference "zero height line".

The Applicant considers that, by using the aforementioned solution, the tyre checking method makes it possible to obtain an industrial-level automated checking system for tyres built/produced in any production plant, including plants that produce a large number of tyre models, even very different from one another, at the same time meeting the requirements outlined above with particular reference to the accuracy of the checks, to the compatibility with the building/production cycle time and to the flexibility and specificity of the entire checking system with regard to every tyre model.

In accordance with a second aspect, the invention is relative to an apparatus for checking tyres in accordance with claim 11.

The Applicant considers that the apparatus according to the invention solves the problems outlined and allows the application of the method according to the first aspect. In particular, the calculation of the three-dimensional profile of the tyre defines an absolute and precise reference and the control unit is programmed to obtain a relationship, preferably a "difference value", not limited by each different type of tyre and by the conditions around the measurements that are potentially always variable.

The present invention in at least one of the aforementioned aspects can have at least one of the following preferred characteristics.

Preferably, it is foreseen to keep said tool height substantially constant along at least one complete relative rotation of said tyre about said rotation axis.

In the case in which it is wished to take a portion of the surface of the free lateral portion of the tyre to a constant height during a relative rotation between tyre and tool, firstly the height of at least one point, preferably of a plurality of points, of the tyre as given by the profile is determined through a processing of the profile saved for example in a suitable memory. Having taken this height or these heights from the three-dimensional profile, and having established what operation to carry out on it to determine the tool height, the measurement surface is deformed so as to bring it towards the support plane up to such a value, i.e. the distance between support plane and deformed surface of the tyre, which is kept substantially constant for the entire rotation. This substantially constant height value can depend, as stated above, on a single height of the three-dimensional profile, i.e. considering a height of a single point of the three-dimensional profile, it is established that the tool height is equal to such a height (fixed value) from which a constant value is subtracted:

$$\text{tool height} = \text{height point 1 (q1)} - \text{Constant value (D)}$$

As will be specified better hereinafter, the sign "-" is correct if the zero is on the support plane of the tyre, according to the preferred solution illustrated here, if however the zero was above the free surface of the tyre, there would be the following:

$$\text{tool height} = \text{height point 1 (q1)} + \text{constant value (D)}$$

This tool height is kept unchanged for every moment of time t, i.e. it is the same for all of the measurement surfaces.

Alternatively, the tool height can depend on a plurality of heights, i.e. for example a plurality of points from 1 to n of the three-dimensional profile is considered, a statistical quantity thereof (mean, median, etc.) is calculated and from such a statistical quantity a constant value is subtracted:

$$\text{tool height: "statistical" height} - \text{constant value (D)}$$

Also in this case, as above, the sign "-" is correct if the zero is on the support plane of the tyre.

This tool height is kept unchanged for every moment of time t, i.e. it is the same for all of the measurement surfaces.

In both cases, the position along the vertical axis of the tool that deforms the surface of the tyre remains substantially unchanged during the relative rotation by 360° between tool and tyre.

Preferably, it is foreseen to determine a mean height with respect to said support plane of a plurality of points of said three-dimensional profile of said ring-shaped surface.

Preferably, it is foreseen to push said measurement surface through said tool up to a predetermined tool height calculated with respect to said mean height of said ring-shaped surface.

In a preferred example, the tool height that preferably is maintained for the entire relative rotation between tyre and tool is a function of the mean height of a plurality of points belonging to the measurement surfaces. From such a mean height calculated from the three-dimensional profile, the tool height can be obtained in various ways.

In this preferred example, no precise difference is obtained between the height of the points forming the three-dimensional profile and the height to which it is wished to bring the measurement surface of the tyre, but the precise height that can be obtained from a plurality of points forming the profile of the tyre is initially averaged to find a single mean height of the entire ring-shaped surface, from which the value to which it is wished to bring the measurement surface is subtracted. For example, with "qmean" representing the mean height obtained from the points of the profile, the "tool height" is given by "qmean - D", where D is a constant value for the entire rotation of the tyre, and therefore the difference is also a constant value for the entire rotation of the tyre. As above, the sign "-" is correct if the zero is on the support plane of the tyre. Good accuracy is obtained by limiting the calculation and checking capacity necessary.

Preferably, it is foreseen to calculate said tool height in a plurality of points angularly spaced apart; for each point, said tool height being equal to the difference between a predetermined constant value and the height of said point as present in said three-dimensional profile.

In this preferred example, the position along a vertical axis of the tool can vary during the relative rotation between tyre and tool. In fact, the tool height depends for every point on the height of the undeformed surface in the same point as obtained from the three-dimensional profile. Therefore, at every moment in time t the tool height can differ, i.e. the tool height at time t and at time t+1 can be different. For example, the tool height in the i-th point can be calculated as

$$\text{I-th tool height} = \text{i-th point height} - \text{constant value (D)}$$

Where the height of the i-th point is given by the three-dimensional profile and can vary from point to point.

Also in such a case, as above, the sign "-" is correct if the zero is on the support plane of the tyre.

A simple function with which to obtain the tool height at a certain i-th point from the height of the same i-th point as given by the three-dimensional profile is to subtract a constant value from the height value given by the three-dimensional profile for each i-th point (i.e. one constant value for all of the i-th points). Instead of the height as obtained from the three-dimensional profile, a statistical function thereof can be used, i.e. a value derived from one or more points of the three-dimensional profile.

Preferably, it is foreseen to provide a database including a plurality of tyre models, each tyre model of the plurality being associated with a value of said tool height.

Preferably, it is foreseen to determine the tyre model arranged on the support plane.

Preferably, it is foreseen to recover a value of said tool height saved in said database and associated with the tyre model determined.

Preferably, it is foreseen to push said measurement surface through said tool so as to apply said tool height as recovered from said database.

The tyres, depending on the size, model and relative dimensional ratios, do not all offer the same resistance to deformation and are not therefore deformable in the same way. For example, excessively deforming a tyre can cause it to be permanently damaged and/or an impossibility of accurately determining the possible presence of detects. A deformation that is too "small" may not allow defects of small size to be detected. Therefore, it is advantageously foreseen to make a database where every tyre model is associated with a height to be imposed on the measurement surface so as to optimise the measurements carried out according to the method of the invention for the detection of possible defects.

Preferably, it is foreseen to recover said three-dimensional profile from a memory.

Detecting the three-dimensional profile of the tyre or of a portion thereof, such as the ring-shaped surface, takes place before the deformation of the measurement surface of the tyre at a substantially constant height. This step of acquisition of the profile can be carried out solely to see whether or not there is a weak sidewall, or it can take place in order to look for other types of defects. In fact, the three-dimensional profile of the tyre can be used to monitor different mutually distinct characteristics of the tyre. Therefore, it is preferable to store the profile of the tyre in order to use it for every requirement and for example for detecting more than one defect in said tyre. The storing can take place for example in a suitable memory and more preferably in a database.

Preferably, it is foreseen to detect a three-dimensional profile of an entire inner surface and an outer surface delimiting said tyre.

Detecting the profile of the entire tyre makes it possible to use the profile to determine defects of a different type in different positions of the tyre.

Preferably, providing a tyre having a rotation axis on a support plane includes arranging said tyre on said support plane with axial mid-plane substantially parallel to the support plane.

In this way, there are portions of outer surface of the tyre that are substantially parallel to the support plane or that have a substantially constant height from the support plane for an extension thereof around the rotation axis of the tyre.

Preferably, said ring-shaped surface is a portion of outer surface of said free lateral portion of said tyre.

Advantageously, the tool is brought towards the outer surface of the tyre, which is easier to access with respect to the inner surface. Therefore, preferably, the measurement surface is a portion of a ring-shaped surface that is part of the outer surface of the tyre. More preferably, it is a portion of the outer surface of the tyre at the free lateral portion thereof. Moreover, the Applicant has been able to verify experimentally that such an area is that which, in an instrument analysis, most clearly highlights the possible weakness of the free lateral portion.

Preferably, pushing said measurement surface through said tool to said tool height includes pushing said measurement surface through said tool up to a tool height comprised between about 5 mm and about 30 mm. More preferably said tool height is comprised between about 5 mm and about 15 mm.

Through laboratory testing, the Applicant has verified that the height to which the measurement surface is to be brought, if within this claimed range, is such as to cause a substantial displacement, but always in an elastic field, of the free lateral portion to evaluate the response thereof in terms for example of rigidity.

Preferably, it is foreseen to obtain said three-dimensional profile.

Preferably, it is foreseen to save said three-dimensional profile in a memory.

Preferably, it is foreseen to use said saved profile to detect more than one type of defect on said tyre.

The detection of a three-dimensional profile of at least one surface of the tyre and therefore the determining an "absolute" reference system can be used not only to detect the weak sidewall defect, but also to detect other defects that are possible in the tyres. Therefore, a single detection step of the profile can be used for different checks of the tyre itself.

Preferably, it is foreseen to set the tyre in rotation about said rotation axis with respect to said tool to vary the measurement surface in contact with said tool.

The rotation of the tyre with respect to the tool is foreseen to limit the possible vibrations of the tool itself and therefore it is possible to obtain a more accurate measurement. Furthermore, setting the tyre in rotation with respect to the tool is technologically simpler.

Preferably, it is foreseen to flip the tyre so as to invert the free lateral portion and the rested lateral portion and repeat the actions according to the first aspect of the invention.

In order to obtain a complete check of the tyre, firstly an outer surface of the lateral portion thereof that is initially free is examined; the tyre is then rotated perpendicular to its rotation axis, and the check is repeated on what was previously the lateral portion rested on the plane, which has now become free. In this way, a check of both sidewalls of the tyre is possible.

Preferably, it is foreseen to classify said tyre as including a defect if at least one value of said measured force exerted on at least one measurement surface in said complete rotation is outside of a predetermined range of force values.

The force necessary to keep said measurement surface at the desired constant height is constantly measured during the relative rotation between tyre and tool. If at least one value of said force, for example in a certain angular range, is outside of a range of predetermined values, for example it is less than a minimum force value, it means that the rigidity of the tyre is excessively low in such an angular range, and therefore the tyre can be considered defective.

Preferably, it is foreseen to inflate said tyre before the pushing action on said measurement surface.

Preferably, said tool includes a thrusting roller.

More preferably, the thrusting roller is mounted so as to be able to rotate freely about its own axis.

Advantageously, the compression takes place through the roller rested against a portion of outer surface of tyre. The roller being able to rotate keeps the portion compressed for a rotation of the tyre about its rotation axis, so that the same surface can be checked in any angular position. When the tyre is set in rotation, the position of the roller remains the same, rotating about its axis due to the rotation of the surface of the tyre with which it is in contact.

Preferably, a thrusting actuator is provided operatively associated with the tool and configured to push the tool against the free lateral portion, said thrusting actuator including an electric motor.

Through an electric motor it is possible to carry out a fine adjustment of the position of the tool and of its distance from the outer surface of the tyre.

Preferably, said measurement surface is arranged at the outer surface of the free lateral portion of the tyre.

More preferably, said measurement surface is arranged at the area of the free lateral portion of the tyre arranged at the greater height with respect to the support plane before the application of said force.

The Applicant has been able to verify experimentally that such an area is that which, in an instrument analysis, most clearly highlights the possible weakness of the free lateral portion.

A memory is provided adapted for storing said three-dimensional profile and adapted for being accessible to access said three-dimensional profile.

Further characteristics and advantages of the invention will become clearer from the following description of a method and an apparatus for checking tyres according to the invention made for indicating and not limiting purposes with reference to the attached figures, in which:

- figure 1 is a schematic perspective view of an apparatus according to the present invention;
- figure 2 is a schematic side section view of the apparatus of figure 1 in a different operative condition;
- figure 3 is a schematic section view of a tyre as arranged in an apparatus according to the present invention;
- figure 4 is a schematic section view of a tyre during a first preferred example of a step of the method of the invention;
- figure 5 is a schematic section view of a tyre during a second preferred example of a step of the method of the invention;
- figure 6 is a schematic view from above of a tyre in a step of the method of the invention; and
- figure 7 is a schematic side section view of the tyre of figure 6 in a further step of the method of the invention.

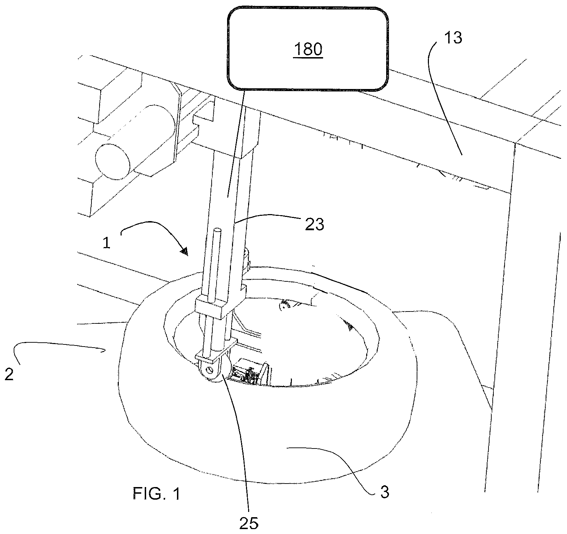

With reference to the attached figures, and in particular initially to figures 1 to 3, reference numeral 1 wholly indicates an apparatus for checking tyres in accordance with the present invention.

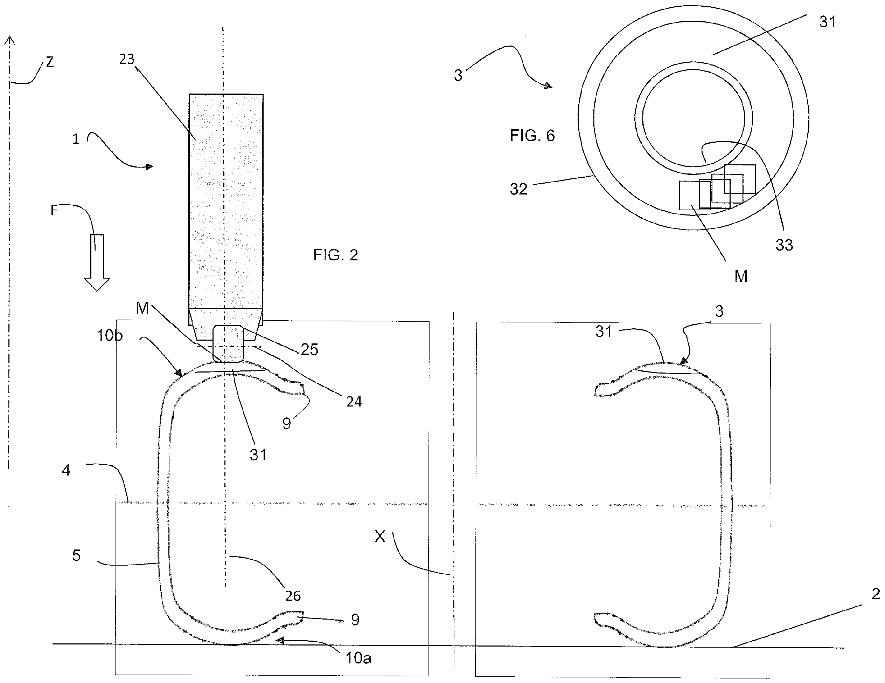

Reference numeral 2 indicates a support plane, preferably horizontal, configured to receive a tyre 3 arranged with axial mid-plane 4 (represented solely in figure 2) substantially parallel to the support plane.

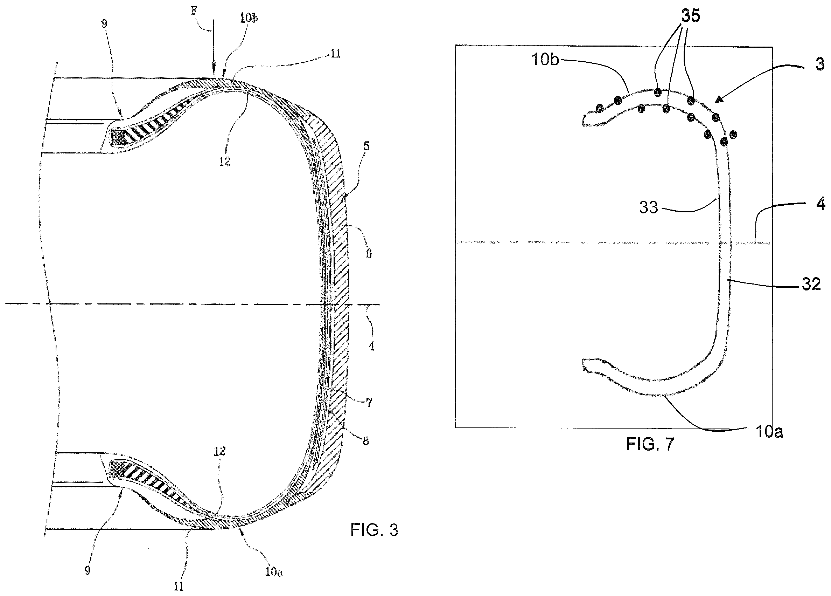

The tyre 3, having rotation axis X, comprises (see in particular figure 3) a crown portion 5 arranged substantially perpendicular to the axial mid-plane, in a radially outer area of the tyre. Such a crown portion 5 corresponds to a tread band 6, to portions of a belt structure 7 and to portions of a carcass structure 8 arranged radially inner with respect to the tread band 6.

The tyre 3 also comprises two anchoring portions 9 arranged radially inner and respectively on opposite sides of the axial mid-plane. The anchoring portions 9 are configured so as to engage with the rim of a wheel.

The tyre 3 also comprises two lateral portions 10a, 10b that extend respectively from axially opposite sides of the axial mid-plane between each of the anchoring portions 9 and the crown portion 5. Every lateral portion corresponds to a sidewall 11 and to portions of the carcass 12 arranged in axially inner position with respect to the sidewall 11.

When the tyre 3 is rested on the support plane 2 one of the two lateral portions of the tyre is directly in contact with the aforementioned support plane 2 defining a rested lateral portion 10a. The other of the two lateral portions of the tyre is arranged at a certain height with respect to the support plane defining a free lateral portion 10b.

The support plane 2 is arranged inside a frame 13, schematically and partially visible in figure 1, with respect to which it can rotate about an axis coinciding with the rotation axis X of the tyre rested on it. The apparatus 1 also comprises devices for setting the support plane 2 in rotation with respect to the frame 13, not illustrated.

The apparatus for checking tyres 1 includes, in addition to the frame 13 and to the support plane 2, a tool, such as a pushing element 23, adapted for resting and for pushing, deforming, a portion of the tyre 3, and in particular for resting and deforming a part of the free lateral portion 10b.

Preferably, the pushing element 23 comprises a wheel 25 arranged with rotation axis 24 preferably horizontal and, in use, oriented substantially according to a radial direction of the tyre rested on the support plane 2 (see for example the configuration represented in figure 2).

The pushing element 23, for example including a thrusting actuator, is configured to be pushed against the free lateral portion 10b along a pushing direction so as to apply a deformation, with force to be determined F on the free portion of the tyre. Preferably, the thrusting direction comprises a component along a vertical axis, for example parallel to the axis Z as depicted in figure 2. Such an axis is indicated with 26 in the same figure and hereinafter called "approach direction".

The apparatus 1 also comprises a control unit 180 (visible only in figure 1) in which a three-dimensional profile of at least one portion of the tyre 3 is saved, for example in a suitable memory that cannot be seen. With reference to figures 6 and 7, such a portion comprises at least one ring-shaped surface 31, having substantially the shape of a toric section, better described hereinafter.

As can be seen in the schematic representation of figure 6, the tyre 3 is delimited by an outer surface 32 and by an inner surface 33 that constitute in every section of the tyre the perimeter edge thereof. The pushing element 23, and in particular the wheel 25, is adapted for making contact with a portion of the outer surface 12 at the free lateral portion 10b. Moreover, since preferably during checking the tyre is set in rotation with respect to the pushing element 23, as detailed hereinafter, a ring-shaped surface of the outer surface of the free lateral portion 10b comes in contact with the wheel 25.

Therefore, so that the wheel 25 touches the tyre in a surface portion for which a three-dimensional profile has been acquired, such a profile comprises at least the ring-shaped surface 31.

Preferably, the control unit 180 is also adapted for driving the tool 23 towards and away from the tyre 3, as well as for adjusting a height at which to shift the tool along the vertical axis Z so as to take the surface of the tyre 3 on which the tool abuts to the same height. The height to which the surface of the tyre is to be brought depends, amongst other things, preferably on the type and/or model of tyre. Therefore, for example in the same memory in which the three-dimensional profile of the tyre is stored, a database is also saved in which for every type and/or model of tyre a value of the tool height to which to bring the surface of the tyre is associated.

The three-dimensional profile saved in the memory of the control unit 180 includes for example a plurality of sections like that of figure 7, which can consist of continuous lines or a plurality of discrete points, for example indicated with 35, the outline of which describes the ring-shaped surface 31. Preferably, a three-dimensional profile of the entire inner surface 33 and of the entire outer surface 32 is present in the memory of the control unit 180.

In the memory of the control unit one or more functions are also saved that associate a tool height to which to take the surface with every height of the three-dimensional profile. In other words, for every tyre model according to the aforementioned database, for every point i of the surface of the tyre on which the tool can abut, there is the relationship

Tool height of the i-th point = f(height of the i-th point according to profile)

Where tool height of point i is the height to which the surface with the i-th point is shifted through the tool.

Such a relationship can for example be

$$\text{Tool height of the i-th point} = (\text{height of the i-th point according to profile}) - D$$

Where D is a constant.

It is observed that the sign "-" is correct if the zero as reference is at the level of the support plane, i.e. at least below the deformed free surface 10b. In the opposite case, if the zero was as reference above the free surface 10b there would be the following:

$$\text{Tool height of the i-th point} = (\text{height of the i-th point according to profile}) + D$$

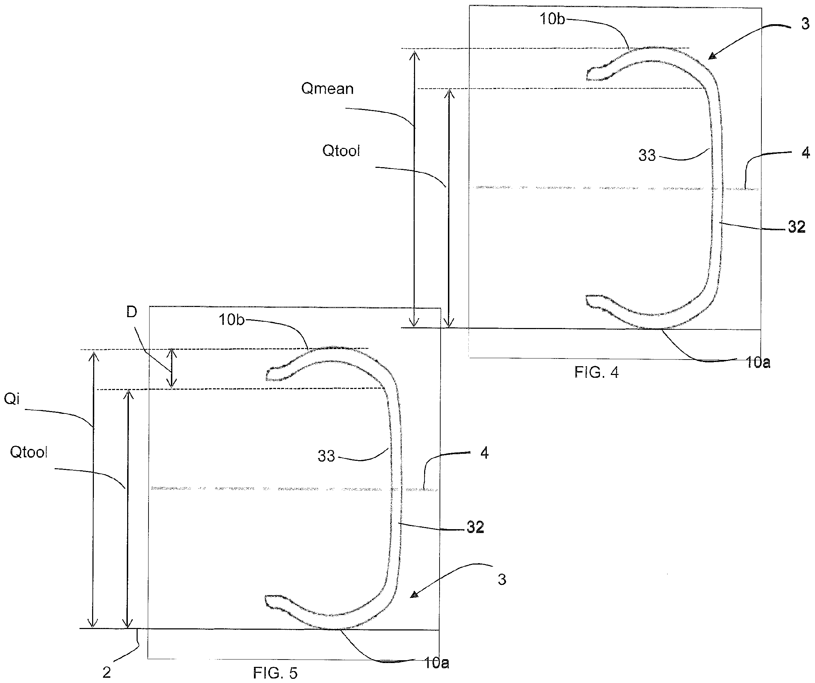

Such a function is represented for example in figure 5 where for every point i the height Qi is known from the three-dimensional profile and a constant value D (equal for each i-th point) is subtracted from it, from which a tool height value to which to bring the i-th point is obtained. Such a tool height value can therefore vary from point to point.

Alternatively, as shown in figure 4, for every i-th point of the deformed surface of the tyre through the tool, the height to which it is brought is constant, and is given by:

$$\text{tool height} = \text{mean height} - D$$

where

$$\text{mean height} = \text{calculation of mean height of the i-th points of the surfaces to be deformed according to three-dimensional profile}$$

and D is a constant.

Such a tool height value is equal for every i-th point.

Also in this case the previous consideration outlined above relative to the correctness of the sign "-" is valid.

In use, a tyre 3 is arranged on the support plane 2 with axial mid-plane substantially parallel to the support plane itself, so as to define the rested lateral portion 10a and the free lateral portion 10b.

Since the three-dimensional profile of the tyre 3 is known, the spatial position thereof is known and therefore so it the position thereof relative to the support plane 2.

In order to apply the deformation oriented towards the support plane 2 to a measurement surface of the free lateral portion 10b, part of the ring-shaped surface 31, the pushing element 23 is positioned with respect to the free lateral portion 10b at the vertical on the measurement surface. The positioning does not require that the position of the "upper edge" of the tyre is detected, since such a position is known from the three-dimensional profile. Thereafter, an approach stroke to the free lateral portion 10b is activated bringing the pushing element 23 towards the tyre 3. Finally, a pushing stroke of the pushing element 23 against the free lateral portion 10b is activated.

In greater detail, the deformation applied has at least one motion component parallel to the rotation axis X of the tyre.

The movement of the tool 23 can take place for example through a first radial shift and a second shift along the axis 26 towards the tyre.

The initial radial shift of the tool 23 is carried out based on the size of the tyre being tested until the pushing element 23 is positioned with respect to the free lateral portion 10b at the vertical on the selected measurement surface. In other words, the shift is carried out until it reaches the radial position corresponding to the desired measurement surface. The measurement surface is for example arranged at the area of the free lateral portion 10b of the tyre arranged at the greater height with respect to the support plane 2 before the application of the deformation. Preferably, the measurement surface is arranged at the axially outer area of the free lateral portion 10b of the tyre.

Having reached the desired radial position, through the approach actuator the approach stroke to the free lateral portion 10b is activated bringing the pushing element 23 towards the tyre 3 along the approach direction 26.

The approach stroke is blocked when the outer surface 32 of the tyre 3 is reached, the height of which is known since the three-dimensional profile of the tyre is known.

Such a position allows the pushing element 23 to come into contact with the free lateral portion 10b. The thrusting actuator is thus shifted so as to take the surface against which the tool is abutted to the desired tool height. The value of the tool height is determined for example by recovering such a value from the database present in the control unit 180. The value of the height depends on the type and/or model of tyre that has been rested on the support plane 2 and on the type of function selected linking the value of the tool height to the value of the three-dimensional profile of the height of the undeformed surface. However, it is possible to foresee a manual insertion of the value of the tool height or a modification of the preset value of the height. The measurement surface M corresponds to the surface of the free lateral portion 10b in contact with the pushing element 23.

Possibly, the tyre can be both deflated and mounted on its own mounting rim and inflated before the pushing action on said measurement surface M to the tool height.

The support plane 2 is set in rotation about the rotation axis X of the tyre 3 keeping the contact between the pushing element 23 and the free lateral portion 10b of the tyre to be checked. The pushing element 23 maintains its position and the wheel 25 rotates on the free lateral portion 10b.

It is preferable for the measurement surface to be arranged a substantially constant distance from the rotation axis. Therefore, the wheel 25 comes into contact with a plurality of measurement surfaces M, all part of the ring-shaped surface 31. A plurality of measurement surfaces M are thus defined that are angularly spaced apart, as exemplified in figure 6, where every measurement surface is indicated with a rectangle.

In accordance with a possible embodiment, the tool height is kept substantially constant in the different steps of the checking of the tyre, like in the example of figure 4. Alternatively, like in figure 5, such a tool height varies during the rotation of the tyre 3 and solely the deformation D is constant. In any case, during the deformation imposed to take the measurement surface M to the tool height, the force F exerted by the tool on the measurement surface M to take it to such a height is detected at every position taken up by the wheel on a distinct measurement surface M.

For example to detect the height of the free lateral portion 10b, the apparatus 1 can comprise a linear position transducer (not illustrated) suitable for detecting the positions of the pushing element 23.

By examining the value of the force F that is exerted, it is thus determined whether or not there are defects on the tyre. In fact, if the value of the force F for one or more points of the measurement surface is outside of a predetermined range, for example between about 10 N and about 150 N, the tyre is considered defective due to the presence of a so-called weak sidewall defect.

In other words, the surface portion for which the profile is detected comprises at least one ring-shaped surface about the rotation axis of the tyre. The profile of an annular surface is detected so as to be able to carry out a relative rotation of the tyre by 360° with respect to the tool knowing the position of the surface of the tyre to be checked in every angular position during the aforementioned rotation, since the surface to be checked is part of the ring-shaped surface for which the three-dimensional profile is detected.

The three-dimensional profile, however, can be detected for the entire tyre and not only a portion thereof, for example the profile of the entire inner surface and/or of the entire outer surface thereof can be detected.

The tool that carries out the deformation is rested on this ring-shaped surface, and in detail in a portion thereof called measurement surface. Tyre and tool are then set in relative rotation, so that the tool at each time t deforms a different measurement surface, which continues to be part of the ring-shaped surface, angularly displaced with respect to the measurement surface with which the tool was in contact at time t-1. This deformation ends when the entire ring-shaped surface has been crossed (i.e. a rotation of at least 360° has been carried out) and deformed by the tool.

Preferably, the angular speed of relative rotation between tyre and tool is substantially constant. Preferably, the peripheral speed of the tyre is substantially constant and preferably dependent on the outer diameter of the tyre under examination.

Therefore, no preliminary investigative step to the deformation is necessary to determine the spatial position of the tyre, for example with respect to the support plane, so as to correctly rest the tool on it. The position of the tyre, and therefore of the measurement surface, is always known thanks to its three-dimensional profile, i.e. the height of at least one plurality of points of the ring-shaped surface, being known.

The elastic deformation of the surface of the tyre through the tool results in a variation of the height of the point at which the deformation is carried out. Since the tool has a finite size, the height of a single point is not changed, but rather that of a surface of the tyre. The height to which the surface of the tyre is brought through the deformation is a function of the original height (i.e. prior to deformation) of the point at which the deformation is applied. The original height of the point at which the deformation is carried out is "absolute" since it is derived from the three-dimensional profile of the tyre. Such an original height is thus known from the three-dimensional profile of the tyre. The deformation of the tyre through the tool takes place so that the height to which the measurement surface is brought - called tool height - is predetermined and depends on the original height, i.e. pre-deformation, of the measurement surface. The pre-deformation height is the original height of the measurement surface that is given by the three-dimensional profile of the tyre.

The height to which the surface of the tyre is brought can for example be substantially the same for all of the measurement surfaces that are deformed, i.e. for all of the points of the surface of the tyre that come into contact with the tool, or it can vary from point to point. Such a height is for example the distance between the support plane and the deformed surface. In any case, the height to which the measurement surface is brought through the deformation always depends on, or in other words is a function of the original pre-deformation height of the surface that is deformed, as present in the three-dimensional profile.

The tool is brought into contact during the rotation with a plurality of surface portions, each of which is deformed during the rotation. These deformed surface portions angularly spaced apart are preferably all at the same axial distance from the rotation axis of the tyre.

During the deformation of the measurement surfaces for a relative rotation of 360° between tool and tyre, the force that is applied by the tool to bring the portion of deformed surface of the tyre to the required tool height, a function of the original pre-deformation height of the measurement surface, is detected. This force is detected either continuously (i.e. obtaining a continuous line of heights) or at intervals, preferably regular, for example every 0.1 radians, or even in an equivalent manner every 0.2 seconds considering a substantially constant rotation speed of the tyre.

This plurality of forces that are measured for each of the measurement surfaces deformed by the tool substantially correspond to the reactions that each measurement surface has had to the deformation. The deformation, i.e. the force that must be exerted by the tool to take the measurement surface from the original height to the desired tool height, is indicative of the reaction - possibly different from point to point - of the portion of tyre in response to such a deformation. The tyre, however, has an imprint thereof that varies at every moment t, and therefore a different measured force is also due to the different characteristics of the tyre between one portion thereof and another, i.e. between one measurement surface and another. By examining these differences, for example considering a "minimum" force as acceptable, it is possible to in any case highlight possible defects of the tyre, like for example a weak sidewall.

The detection of the three-dimensional profile of the tyre makes it possible to establish a height of the geometric points forming the three-dimensional profile and from this to determine the tool height to which to bring the tyre, a tool height that is unconstrained by each different type of tyre, by the characteristics of the support plane and by the conditions at the perimeter of the measurements that are potentially always variable.

Once the tool height has been determined, the force to take every measurement surface of the tyre to such a height is measured. From the force measured it is possible to very precisely measure the defects of the tyre.

In this way, an absolute reference is used for the deformation making it possible to obtain an evaluation of whether or not there are defects in a single complete rotation of the tyre. The cycle time is in this way decreased, and at the same time the measurement is more accurate.

## Claims

1. Method for checking tyres, comprising:

   i. providing a tyre (3) having a rotation axis (X) on a support plane (2) defining a rested lateral portion (10a) and a free lateral portion (10b) of the tyre;
   ii. detecting at least one three-dimensional profile of a ring-shaped surface (31) of said tyre with centre in said rotation axis (X), said three-dimensional profile including a height of a plurality of points of said ring-shaped surface (31) and storing said three-dimensional profile in a memory adapted for being accessible to access said three-dimensional profile;
   iii. providing a tool (23, 25) configured to apply a deformation oriented towards the support plane (2) to a measurement surface (M) of said free lateral portion (10b) and shifting said tool (23, 25) towards said tyre arranged on the support plane (2) so as to rest on the measurement surface (M), said measurement surface (M) being a portion of said ring-shaped surface (31);
   iv. pushing said measurement surface (M) through said tool (23, 25) up to a predetermined tool height calculated with respect to a value that is a function of the height given by said three-dimensional profile of said ring-shaped surface (31) for the measurement surface (M) prior to deformation;
   v. setting said tyre (3) in relative rotation with respect to said tool (23, 25) so that said tool is in successive contact with a plurality of different measurement surfaces (M), portions of said ring-shaped surface (31), angularly spaced, along at least one complete relative rotation of said tyre about said rotation axis (X);
   vi. measuring a force (F) exerted by said tool (23, 25) on said plurality of measurement surfaces (M) at a plurality of relative angular positions between said tyre and said tool along said complete rotation; and
   vii. determining whether said tyre (3) has a defect based on said measured force (F).

2. Method according to claim 1, including:

   • keeping said tool height substantially constant along at least one relative complete rotation of said tyre (3) about said rotation axis (23, 25).

3. Method according to claim 1 or 2, including:

   • determining an average height with respect to said support plane (2) of a plurality of points of said three-dimensional profile of said ring-shaped surface (31),
   • wherein the predetermined tool height is calculated with respect to said average height of said ring-shaped surface (31).

4. Method according to one or more of the previous claims, including:

   • Calculating said tool height in a plurality of angularly spaced points, wherein, for each point, said tool height is equal to the difference between a predetermined constant value and the height of said point given by said three-dimensional profile.

5. Method according to one or more of the previous claims, including:

   - Providing a database including a plurality of tyre models, each tyre model of the plurality being associated with a value of said tool height;
   - Determining the tyre model arranged on the support plane (2);
   - Recovering a value of said tool height saved in said database and associated with the tyre model (3) determined;
   - wherein pushing said measurement surface (31) through said tool (23, 25) is up to said tool height as recovered from said database.

6. Method according to one or more of the previous claims, including detecting a three-dimensional profile of an entire inner surface (32) and an outer surface (33) delimiting said tyre.

7. Method according to one or more of the previous claims, wherein said ring-shaped surface (31) is a portion of outer surface (32) of said free lateral portion (10b) of said tyre (3).

8. Method according to one or more of the previous claims, wherein pushing said measurement surface (31) through said tool (23, 25) up to said tool height includes pushing said measurement surface (M) through said tool up to a tool height comprised between about 5 mm and about 30 mm.

9. Method for checking tyres according to one or more of the previous claims, comprising setting the tyre (3) in rotation about said rotation axis (X) with respect to said tool (23, 25) to change the measurement surface (M) in contact with said tool (23, 25).

10. Method according to one or more of the previous claims, including:

    - classifying said tyre (3) as including a defect if at least one value of said measured force exerted on at least one measurement surface in said complete rotation is outside of a predetermined range of force values (F).

11. Apparatus (1) for checking tyres, including:

    - a support plane (2) configured to receive a tyre (3), defining a rested lateral portion (10a) and a free lateral portion (10b);
    - a tool (23, 25) configured to apply a deformation oriented towards the support plane (2) on a measurement surface (M) of said free lateral portion (10b) of the tyre (3);
    - a positioning actuator operatively associated with the tool (23, 25) and configured to move said tool with at least one motion component parallel to a rotation axis (X) of the tyre (3);
    - a rotation device to relatively change the angular position of the measurement surface (M) with respect to the tool (23, 25);
    - a control unit (180) programmed to

◦ access from a memory a stored three-dimensional profile of a ring-shaped surface (31) with centre in said rotation axis of said tyre (3) before deformation, said three-dimensional profile including a height of a plurality of points of said ring-shaped surface (31);

◦ sending a command to said positioning actuator so as to shift said tool (23, 25) towards said tyre (3) arranged on the support plane (2) so as to rest on said measurement surface (M), said measurement surface being a portion of said ring-shaped surface (31), and pushing said measurement surface (M) up to a predetermined tool height that is calculated with respect to a value that is a function of a height given by said three-dimensional profile of said ring-shaped surface (31) prior to deformation;

◦ sending a command to said rotation device to set said tyre (3) in relative rotation with respect to said tool (23, 25) so that said tool is in successive contact with a plurality of different measurement surfaces (M) that are portions of said ring-shaped surface (31), along at least one relative complete rotation of said tyre (3) about said rotation axis (X); said tool height being for each measurement surface (M) a function of a height given by said three-dimensional profile of said measurement surface (M) prior to deformation; and

◦ measuring a force (F) exerted on said plurality of said measurement surfaces (M) at a plurality of relative angular positions between said tyre (3) and said tool (23, 25) along said complete rotation.

12. Apparatus (1) according to claim 11, wherein said tool (23, 25) includes a thrusting roller.

13. Apparatus (1) for checking tyres according to claims 11 or 12, comprising a thrusting actuator operatively associated with the tool and configured to push the tool against the free lateral portion, said thrusting actuator including an electric motor.

14. Apparatus (1) according to one or more of claims 11 to 13, wherein said ring-shaped surface (31) is a portion of outer surface (32) of said free lateral portion (10b) of said tyre and the said measurement surface (M) is arranged at the outer surface (32) of the free lateral portion (10b) of the tyre (3).

15. Apparatus (1) according to claim 14, wherein said measurement surface (M) is arranged at the area of the free lateral portion (10b) of the tyre arranged at a greater height with respect to the support plane (2) before the application of said force (F).


**Patentansprüche**

1. Verfahren zur Überprüfung von Reifen, umfassend:

   i. Bereitstellen eines Reifens (3) mit einer Drehachse (X) auf einer Trägerebene (2), die einen aufliegenden seitlichen Abschnitt (10a) und einen freien seitlichen Abschnitt (10b) des Reifens definiert;

   ii. Erfassen zumindest eines dreidimensionalen Profils einer ringförmigen Oberfläche (31) des Reifens mit dem Mittelpunkt in der Drehachse (X), wobei das dreidimensionale Profil eine Höhe einer Vielzahl von Punkten der ringförmigen Oberfläche (31) umfasst, und Speichern des dreidimensionalen Profils in einem Speicher, der dazu geeignet ist, zugreifbar zu sein, um auf das dreidimensionale Profil zuzugreifen;

   iii. Bereitstellen eines Werkzeugs (23, 25), das dazu ausgestaltet ist, eine Verformung, die auf die Trägerebene (2) hin orientiert ist, auf eine Messoberfläche (M) des freien seitlichen Abschnitts (10b) auszuüben, und Verschieben des Werkzeugs (23, 25) zu dem Reifen hin, der an der Trägerebene (2) angeordnet ist, so dass es auf der Messoberfläche (M) aufliegt, wobei die Messoberfläche (M) ein Abschnitt der ringförmigen Oberfläche (31) ist;

   iv. Drücken der Messoberfläche (M) durch das Werkzeug (23, 25) bis auf eine vorbestimmte Werkzeughöhe, die in Bezug auf einen Wert berechnet wird, der eine Funktion der durch das dreidimensionale Profil der ringförmigen Oberfläche (31) für die Messoberfläche (M) vor der Verformung gegebenen Höhe ist;

   v. Versetzen des Reifens (3) in relative Drehung in Bezug auf das Werkzeug (23, 25), so dass das Werkzeug entlang zumindest einer vollständigen relativen Drehung des Reifens um die Drehachse (X) aufeinanderfolgend in Kontakt mit einer Vielzahl von verschiedenen Messoberflächen (M), winkelförmigen Abschnitten der ringförmigen Oberfläche (31), steht;

   vi. Messen einer Kraft (F), die von dem Werkzeug (23, 25) auf die Vielzahl von Messoberflächen (M) an einer Vielzahl von relativen winkelförmigen Positionen zwischen dem Reifen und dem Werkzeug entlang der vollständigen Drehung ausgeübt wird; und

   vii. Bestimmen, ob der Reifen (3) einen Defekt aufweist, auf Grundlage der gemessenen Kraft (F).

**2.** Verfahren nach Anspruch 1, umfassend:

• Halten der Werkzeughöhe im Wesentlichen konstant entlang zumindest einer vollständigen relativen Drehung des Reifens (3) um die Drehachse (23, 25).

**3.** Verfahren nach Anspruch 1 oder 2, das beinhaltet:

• Bestimmen einer durchschnittlichen Höhe einer Vielzahl von Punkten des dreidimensionalen Profils der ringförmigen Oberfläche (31) in Bezug auf die Trägerebene (2),
• wobei die vorbestimmte Werkzeughöhe in Bezug auf die durchschnittliche Höhe der ringförmigen Oberfläche (31) berechnet wird.

**4.** Verfahren nach einem oder mehreren der vorhergehenden Ansprüche, wobei das Verfahren beinhaltet:

• Berechnen der Werkzeughöhe in einer Vielzahl von winkelförmig beabstandeten Punkten, wobei für jeden Punkt die Werkzeughöhe gleich der Differenz zwischen einem vorbestimmten konstanten Wert und der Höhe des Punkts ist, die durch das dreidimensionale Profil gegeben ist.

**5.** Verfahren nach einem oder mehreren der vorhergehenden Ansprüche, wobei das Verfahren beinhaltet:

- Bereitstellen einer Datenbank, welche eine Vielzahl von Reifenmodellen beinhaltet, wobei jedem Reifenmodell der Vielzahl ein Wert der Werkzeughöhe zugeordnet ist;
- Bestimmen des Reifenmodells, das an der Trägerebene (2) angeordnet ist;
- Abrufen eines Werts der Werkzeughöhe, der in der Datenbank gespeichert und dem bestimmten Reifenmodell (3) zugeordnet ist;
- wobei das Drücken der Messoberfläche (31) durch das Werkzeug (23, 25) bis zu der Werkzeughöhe erfolgt, die aus der Datenbank abgerufen wird.

**6.** Verfahren nach einem oder mehreren der vorhergehenden Ansprüche, wobei das Verfahren das Erfassen eines dreidimensionalen Profils einer gesamten inneren Oberfläche (32) und einer äußeren Oberfläche (33), welche den Reifen begrenzen, beinhaltet.

**7.** Verfahren nach einem oder mehreren der vorhergehenden Ansprüche, wobei die ringförmige Oberfläche (31) ein Abschnitt einer äußeren Oberfläche (32) des freien seitlichen Abschnitts (10b) des Reifens (3) ist.

**8.** Verfahren nach einem oder mehreren der vorhergehenden Ansprüche, wobei das Drücken der Messoberfläche (31) durch das Werkzeug (23, 25) bis zu der Werkzeughöhe das Drücken der Messoberfläche (M) durch das Werkzeug bis zu einer Werkzeughöhe zwischen etwa 5 mm und etwa 30 mm beinhaltet.

**9.** Verfahren zur Überprüfung von Reifen nach einem oder mehreren der vorhergehenden Ansprüche, umfassend das Versetzen des Reifens (3) in Drehung um die Drehachse (X) in Bezug auf das Werkzeug (23, 25), um die Messoberfläche (M) in Kontakt mit dem Werkzeug (23, 25) zu ändern.

**10.** Verfahren nach einem oder mehreren der vorhergehenden Ansprüche, wobei das Verfahren beinhaltet:

- Klassifizieren des Reifens (3) als einen Defekt beinhaltend, wenn zumindest ein Wert der gemessenen Kraft, die auf zumindest eine Messoberfläche in der vollständigen Drehung ausgeübt wird, außerhalb eines vorbestimmten Bereichs von Kraftwerten (F) liegt.

**11.** Vorrichtung (1) zur Überprüfung von Reifen, die beinhaltet:

- eine Trägerebene (2), die dazu ausgestaltet ist, einen Reifen (3) aufzunehmen und einen aufliegenden seitlichen Abschnitt (10a) und einen freien seitlichen Abschnitt (10b) definiert;
- ein Werkzeug (23, 25), das dazu ausgestaltet ist, eine Verformung, die auf die Trägerebene (2) hin orientiert ist, auf eine Messoberfläche (M) des freien seitlichen Abschnitts (10b) des Reifens (3) auszuüben,
- ein Positionierstellglied, das dem Werkzeug (23, 25) zugeordnet und dazu ausgestaltet ist, das Werkzeug mit zumindest einer Bewegungskomponente parallel zu einer Drehachse (X) des Reifens (3) zu bewegen;
- eine Dreheinrichtung, um die Winkelposition der Messoberfläche (M) in Bezug auf das Werkzeug (23, 25) relativ zu verändern;
- eine Steuereinheit (180), die dazu programmiert ist

 o auf ein gespeichertes dreidimensionales Profil einer ringförmigen Oberfläche (31) mit dem Mittelpunkt in der Drehachse des Reifens (3) vor der Verformung aus einem Speicher zuzugreifen, wobei das dreidimensionale Profil eine Höhe einer Vielzahl von Punkten der ringförmigen Oberfläche (31) beinhaltet;

 o Senden eines Befehls an das Positionierstellglied, um das Werkzeug (23, 25) zu dem Reifen (3), der an der Trägerebene (2) angeordnet ist, hin zu verschieben, so dass es auf der Messoberfläche (M) ruht, wobei die Messoberfläche (M) ein Abschnitt der ringförmigen Oberfläche (31) ist, und Drücken der Messoberfläche (M) bis auf eine vorbestimmte Werkzeughöhe, die in Bezug auf einen Wert berechnet wird, der eine Funktion der durch das dreidimensionale Profil der ringförmigen Oberfläche (31) für die Messoberfläche (M) vor der Verformung gegebenen Höhe ist;

 o Senden eines Befehls an die Dreheinrichtung, um den Reifen (3) in relative Drehung in Bezug auf das Werkzeug (23, 25) zu versetzen, so dass das Werkzeug entlang zumindest einer vollständigen relativen Drehung des Reifens (3) um die Drehachse (X) aufeinanderfolgend in Kontakt mit einer Vielzahl von verschiedenen Messoberflächen (M), die Abschnitte der ringförmigen Oberfläche (31) sind, steht; wobei die Werkzeughöhe für jede Messoberfläche (M) eine Funktion der durch das dreidimensionale Profil der Messoberfläche (M) vor der Verformung gegebenen Höhe ist; und

 ∘ Messen einer Kraft (F), die auf die Vielzahl von Messoberflächen (M) an einer Vielzahl von relativen winkelförmigen Positionen zwischen dem Reifen (3) und dem Werkzeug (23, 25) entlang der vollständigen Drehung ausgeübt wird.

**12.** Vorrichtung (1) nach Anspruch 11, wobei das Werkzeug (23, 25) eine Andruckrolle umfasst.

**13.** Vorrichtung (1) zur Überprüfung von Reifen nach einem der Ansprüche 11 oder 12, umfassend ein Andruckstellglied, das mit dem Werkzeug in Wirkzuordnung steht und dazu ausgestaltet ist, das Werkzeug gegen den freien seitlichen Abschnitt zu drücken, wobei das Andruckstellglied einen Elektromotor umfasst.

**14.** Vorrichtung (1) nach einem oder mehreren der Ansprüche 11 bis 13, wobei die ringförmige Oberfläche (31) ein Abschnitt der äußeren Oberfläche (32) des freien seitlichen Abschnitts (10b) des Reifens ist und die Messoberfläche (M) an der äußeren Oberfläche (32) des freien seitlichen Abschnitts (10b) des Reifens (3) angeordnet ist.

**15.** Vorrichtung (1) nach Anspruch 14, wobei die Messoberfläche (M) an dem Bereich des freien seitlichen Abschnitts (10b) des Reifens angeordnet ist, der vor der Ausübung der Kraft (F) in einer größeren Höhe in Bezug auf die Trägerebene (2) angeordnet ist.


**Revendications**

**1.** Procédé de vérification des pneus, comprenant le fait :

 i. de fournir un pneu (3) ayant un axe de rotation (X) sur un plan de support (2) définissant une partie latérale au repos (10a) et une partie latérale libre (10b) du pneu ;

 ii. de détecter au moins un profil tridimensionnel d'une surface en forme d'anneau (31) dudit pneu avec le centre dans ledit axe de rotation (X), ledit profil tridimensionnel comportant une hauteur d'une pluralité de points de ladite surface en forme d'anneau (31) et de stocker ledit profil tridimensionnel dans une mémoire adaptée pour être accessible pour accéder audit profil tridimensionnel ;

 iii. de fournir un outil (23, 25) configuré pour appliquer une déformation orientée vers le plan de support (2) à une surface de mesure (M) de ladite partie latérale libre (10b) et déplacer ledit outil (23, 25) vers ledit pneu agencé sur le plan de support (2) de manière à reposer sur la surface de mesure (M), ladite surface de mesure (M) étant une partie de ladite surface en forme d'anneau (31) ;

 iv. de pousser ladite surface de mesure (M) à travers ledit outil (23, 25) jusqu'à une hauteur d'outil prédéterminée calculée par rapport à une valeur qui est fonction de la hauteur donnée par ledit profil tridimensionnel de ladite surface en forme d'anneau (31) pour la surface de mesure (M) avant la déformation ;

 v. de mettre en rotation relative ledit pneu (3) par rapport audit outil (23, 25) de sorte que ledit outil soit en contact successif avec une pluralité de surfaces de mesure différentes (M), des parties de ladite surface en forme d'anneau (31), espacées angulairement, le long d'au moins une rotation relative complète dudit pneu autour dudit axe de rotation (X) ;

vi. de mesurer une force (F) exercée par ledit outil (23, 25) sur ladite pluralité de surfaces de mesure (M) à une pluralité de positions angulaires relatives entre ledit pneu et ledit outil le long de ladite rotation complète ; et
vii. de déterminer si ledit pneu (3) a un défaut sur la base de ladite force mesurée (F).

2. Procédé selon la revendication 1, comportant le fait :

• de maintenir ladite hauteur d'outil essentiellement constante le long d'au moins une rotation complète relative dudit pneu (3) autour dudit axe de rotation (23, 25).

3. Procédé selon la revendication 1 ou 2, comportant le fait :

• de déterminer une hauteur moyenne par rapport audit plan de support (2) d'une pluralité de points dudit profil tridimensionnel de ladite surface en forme d'anneau (31),
• dans lequel la hauteur d'outil prédéterminée est calculée par rapport à ladite hauteur moyenne de ladite surface en forme d'anneau (31).

4. Procédé selon une ou plusieurs des revendications précédentes, comportant le fait :

• de calculer ladite hauteur d'outil en une pluralité de points angulairement espacés, où, pour chaque point, ladite hauteur d'outil est égale à la différence entre une valeur constante prédéterminée et la hauteur dudit point donnée par ledit profil tridimensionnel.

5. Procédé selon une ou plusieurs des revendications précédentes, comportant le fait :

- de fournir une base de données comportant une pluralité de modèles de pneus, chaque modèle de pneu de la pluralité étant associé à une valeur de ladite hauteur d'outil ;
- de déterminer le modèle de pneu agencé sur le plan de support (2) ;
- de récupérer une valeur de ladite hauteur d'outil enregistrée dans ladite base de données et associée au modèle de pneu (3) déterminé ;
- dans lequel le fait de pousser ladite surface de mesure (31) à travers ledit outil (23, 25) est effectué jusqu'à ladite hauteur d'outil telle que récupérée à partir de ladite base de données.

6. Procédé selon une ou plusieurs des revendications précédentes, comportant la détection d'un profil tridimensionnel d'une surface interne entière (32) et d'une surface externe (33) délimitant ledit pneu.

7. Procédé selon une ou plusieurs des revendications précédentes, dans lequel ladite surface en forme d'anneau (31) est une partie de surface externe (32) de ladite partie latérale libre (10b) dudit pneu (3).

8. Procédé selon une ou plusieurs des revendications précédentes, dans lequel le fait de pousser ladite surface de mesure (31) à travers ledit outil (23, 25) jusqu'à ladite hauteur d'outil comporte le fait de pousser ladite surface de mesure (M) à travers ledit outil jusqu'à une hauteur d'outil comprise entre environ 5 mm et environ 30 mm.

9. Procédé de vérification des pneus selon une ou plusieurs des revendications précédentes, comprenant la mise en rotation du pneu (3) autour dudit axe de rotation (X) par rapport audit outil (23, 25) pour changer la surface de mesure (M) en contact avec ledit outil (23, 25).

10. Procédé selon une ou plusieurs des revendications précédentes, comportant le fait :

- de classer ledit pneu (3) comme comportant un défaut si au moins une valeur de ladite force mesurée exercée sur au moins une surface de mesure dans ladite rotation complète est en dehors d'une plage prédéterminée de valeurs de force (F).

11. Appareil (1) de vérification des pneus, comportant :

- un plan de support (2) configuré pour recevoir un pneu (3), définissant une partie latérale au repos (10a) et une partie latérale libre (10b) ;
- un outil (23, 25) configuré pour appliquer une déformation orientée vers le plan de support (2) sur une surface de mesure (M) de ladite partie latérale libre (10b) du pneu (3) ;

- un actionneur de positionnement associé de manière fonctionnelle à l'outil (23, 25) et configuré pour déplacer ledit outil avec au moins une composante de mouvement parallèle à un axe de rotation (X) du pneu (3) ;
- un dispositif de rotation pour modifier relativement la position angulaire de la surface de mesure (M) par rapport à l'outil (23, 25) ;
- une unité de commande (180) programmée pour

◦ accéder à partir d'une mémoire à un profil tridimensionnel stocké d'une surface en forme d'anneau (31) avec le centre dans ledit axe de rotation dudit pneu (3) avant la déformation, ledit profil tridimensionnel comportant une hauteur d'une pluralité de points de ladite surface en forme d'anneau (31) ;

◦ envoyer une instruction audit actionneur de positionnement de manière à déplacer ledit outil (23, 25) vers ledit pneu (3) agencé sur le plan de support (2) de manière à reposer sur ladite surface de mesure (M), ladite surface de mesure étant une partie de ladite surface en forme d'anneau (31), et pousser ladite surface de mesure (M) jusqu'à une hauteur d'outil prédéterminée qui est calculée par rapport à une valeur qui est fonction d'une hauteur donnée par ledit profil tridimensionnel de ladite surface en forme d'anneau (31) avant la déformation ;

◦ envoyer une instruction audit dispositif de rotation pour mettre en rotation relative ledit pneu (3) par rapport audit outil (23, 25) de sorte que ledit outil soit en contact successif avec une pluralité de surfaces de mesure différentes (M) qui sont des parties de ladite surface en forme d'anneau (31), le long d'au moins une rotation complète relative dudit pneu (3) autour dudit axe de rotation (X) ; ladite hauteur d'outil étant pour chaque surface de mesure (M) une fonction d'une hauteur donnée par ledit profil tridimensionnel de ladite surface de mesure (M) avant la déformation ; et

◦ mesurer une force (F) exercée sur ladite pluralité desdites surfaces de mesure (M) à une pluralité de positions angulaires relatives entre ledit pneu (3) et ledit outil (23, 25) le long de ladite rotation complète.

**12.** Appareil (1) selon la revendication 11, dans lequel ledit outil (23, 25) comporte un rouleau de poussée.

**13.** Appareil (1) de vérification des pneus selon la revendication 11 ou 12, comprenant un actionneur de poussée associé de manière fonctionnelle à l'outil et configuré pour pousser l'outil contre la partie latérale libre, ledit actionneur de poussée comportant un moteur électrique.

**14.** Appareil (1) selon une ou plusieurs des revendications 11 à 13, dans lequel ladite surface en forme d'anneau (31) est une partie de surface externe (32) de ladite partie latérale libre (10b) dudit pneu et ladite surface de mesure (M) est agencée au niveau de la surface externe (32) de la partie latérale libre (10b) du pneu (3).

**15.** Appareil (1) selon la revendication 14, dans lequel ladite surface de mesure (M) est agencée au niveau de la zone de la partie latérale libre (10b) du pneu agencée à une plus grande hauteur par rapport au plan de support (2) avant l'application de ladite force (F).

EP 3 488 213 B1

FIG. 1

EP 3 488 213 B1

Z

23

1

F

FIG. 2

M

10b

25

24

9

31

4

5

26

9

10a

X

31

3

2

FIG. 6

3

31

32

33

M

FIG. 7

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060272408 A
- WO 2015079370 A
- US 4223386 A